# EUROPÄISCHE PATENTSCHRIFT

(11) **EP 3 898 353 B1**
(45) Veröffentlichungstag und Bekanntmachung des Hinweises auf die Patenterteilung: **30.08.2023**
(21) Anmeldenummer: 19829458.9
(22) Anmeldetag: 12.12.2019
(51) Int. Cl.: B60S 1/64, B60N 2/58, B60N 2/60

(54) **INNENRAUMVERKLEIDUNG FÜR EIN FAHRZEUG UND VERFAHREN ZUM REINIGEN EINER OBERFLÄCHE EINER INNENRAUMVERKLEIDUNG IN EINEM FAHRZEUG, FAHRZEUGSITZ UND FAHRZEUG**
INTERIOR TRIM FOR A VEHICLE AND METHOD FOR CLEANING A SURFACE OF AN INTERIOR TRIM IN A VEHICLE, VEHICLE SEAT, AND VEHICLE
HABILLAGE INTÉRIEUR POUR VÉHICULE ET PROCÉDÉ DE NETTOYAGE D'UNE SURFACE D'UN HABILLAGE INTÉRIEUR DANS UN VÉHICULE, SIÈGE DE VÉHICULE ET VÉHICULE

(30) Priorität: 20.12.2018 DE 102018222652
(43) Veröffentlichungstag der Anmeldung: 27.10.2021
(73) Patentinhaber: VOLKSWAGEN AKTIENGESELLSCHAFT, 38440 Wolfsburg (DE)
(72) Erfinder: SCHÜTZ, Daniel, 38165 Lehre (DE); OTREMBA, Maik, 38118 Braunschweig (DE); HEROLD, Stephan, 38106 Braunschweig (DE); TORO RAMOS, Juan Mauricio, 38102 Braunschweig (DE); TOPPEL, Kristoph, 30173 Hannover (DE)
(86) Internationale Anmeldenummer: PCT/EP2019/084925
(87) Internationale Veröffentlichungsnummer: WO 2020/126833

(56) Entgegenhaltungen:
- DE-A1-102008 024 965
- DE-A1-102017 107 937
- DE-U1- 20 021 839
- KR-A- 20120 088 908
- US-A- 5 549 353
- US-B1- 8 454 085

## Beschreibung

Die Erfindung betrifft eine Innenraumverkleidung für ein Fahrzeug und ein Verfahren zum Reinigen einer Oberfläche einer Innenraumverkleidung in einem Fahrzeug. Ferner betrifft die vorliegende Erfindung einen Fahrzeugsitz und ein Fahrzeug.

Der Innenraum eines Fahrzeugs verschmutzt mit fortschreitendem Gebrauch des Fahrzeugs. Hierbei sammeln sich insbesondere Staub und Schmutzpartikel auf Oberflächen in dem Innenraum des Fahrzeugs an und können sowohl ein Wohlbefinden als auch eine Gesundheit der Fahrzeuginsassen des Fahrzeugs beeinträchtigen. Dies ist insbesondere der Fall, wenn in dem Fahrzeug wechselnde Fahrzeuginsassen befördert werden, wie beispielsweise beim Carsharing oder Ridesharing.

Eine Reinigung des Innenraums des Fahrzeugs erfolgt in der Regel per Hand mittels eines Staubsaugers. Hierzu wird eine Ansaugdüse über Oberflächen im Innenraum geführt, vorhandener Staub und Schmutzpartikel werden weggesaugt und in einem Sammelbehälter aufgefangen. Dies ist zeitraubend und umständlich.

Aus der DE 20 2011 105 169 U1 ist eine Schmutzfangvorrichtung zum Einbau in Fahrzeuge bekannt, mit einer in eine Wannenaufnahme einlegbaren Schmutzfangwanne, einem die Schmutzfangwanne abdeckenden Gitterrost und einem darunter angeordneten Schmutzkasten, wobei das Gitterrost mittels Abstandshaltern in einem vorbestimmten Abstand zu dem Wannenboden der Wannenaufnahme gehalten ist, wobei in den Schmutzkasten ein herausnehmbarer Schmutzsammelbehälter eingesetzt ist.

Aus der US 5 549 353 A ist eine Autositzmatte zur Verwendung mit einem Kindersitz über dem Sitz eines Autos bekannt, bestehend aus einer flexiblen wasserdichten Folie. Diese Folie hat einen Hauptabschnitt, der im Allgemeinen viereckig ist, und einen Lippenabschnitt, der sich mit dem Hauptabschnitt erstreckt. Der Blattlippenabschnitt ist so bemessen, dass er dem Sitzabschnitt des Kindersitzes entspricht, und der Blatthauptabschnitt ist so bemessen, dass er die vertikale Karosserieverkleidung überlappt, die das vordere Ende des festen Autositzes und den Fahrzeugboden überspannt. Ein erster quer verlaufender, im Wesentlichen starrer Ausleger erstreckt sich zwischen dem Blatthauptabschnitt und dem Blattlippenabschnitt, und ein zweiter, im Wesentlichen starrer Ausleger erstreckt sich an einem Endkantenabschnitt der Matte gegenüber dem ersten Ausleger. Der erste Ausleger ist für ein flaches Widerlager gegen den vorderen Endabschnitt des Kindersitzes ausgelegt, und der zweite Ausleger ist so ausgelegt, dass er eine Wassersammeltasche in einem Abstand über dem Fahrzeugboden bildet. Das Blatt schützt den Autositz und die vertikale Karosserie vor versehentlichem Sand- und Schmutzverlust, der durch die nackten Füße, Schuhe oder Stiefel eines Kindes entsteht, das auf dem Kindersitz sitzt.

Aus der KR 10 2012 008 89 08 A ist eine Vorrichtung zum Sammeln von Staub auf einer Matte eines Fahrzeugs bekannt, um Fremdstoffe, die von außen in ein Fahrzeug eintreten, mit einfacher Konfiguration leicht abzuleiten. Die Vorrichtung zum Sammeln von Staub auf einer Matte eines Fahrzeugs umfasst eine Bürstenwalze, eine Antriebswalze, ein Staubsammelgehäuse und einen Kolben. Die Antriebsrolle treibt die Bürstenrolle an. Das Staubsammelgehäuse bettet die Bürstenwalze und die Antriebswalze ein. Der Kolben ist am hinteren Ende des Staubsammelgehäuses ausgebildet, um sich in einem Zylinder gemäß dem Antrieb eines umkehrbaren Motors hin und her zu bewegen. Eine Zahnstange ist am Boden des Kolbens ausgebildet und bewegt sich mit der Drehung eines Ritzels hin und her, der mit der Zahnstange in Eingriff steht.

Aus der DE 10 2008 024 965 A1 ist eine Schmutzfangvorrichtung zum Einbau in Fahrzeuge oder Gebäude bekannt, mit einer Schmutzfangwanne, die in eine einbauseitig vorgesehene Wannenaufnahme eingelegt werden kann. Die Schmutzfangwanne ist mit einem Gitterrost abgedeckt, auf das Gitterrost ist eine Gewebematte aufgelegt, und unterhalb des Gitterrostes ist ein Schmutzkasten angeordnet, in dem sich Schmutz und Wasser sammeln können.

Aus der US 8 454 085 B1 ist ein Sitz oder Sitzbezug mit einer integrierten oder abnehmbaren nach oben ragenden Wandbaugruppe bekannt, die besonders vorteilhaft für die Verwendung auf einem Fahrzeugsitz ist, um zu verhindern, dass Gegenstände in den durch den Sitz und die Konsole eines Fahrzeugs definierten Spalt und den durch den Sitz und die Tür des Fahrzeugs definierten Spalt fallen.

Aus der DE 200 21 839 U1 ist eine Strömungsmaschine mit mindestens einem drehbar angeordneten Schaufelrad und mit mindestens einer Kontaktfläche bekannt, welche mit einem mit dem Schaufelrad in Wechselwirkung stehenden Fluid in Kontakt ist, wobei zumindest ein Teil der Kontaktfläche schmutzabweisend gestaltet ist.

Aus der DE 10 2017 107 937 A1 ist eine Reinigungsvorrichtung bekannt. Die Reinigungsvorrichtung wird betätigt, um mindestens ein Objekt von einem Fahrzeugboden zu einem Behälter zu bewegen. Ein Fahrzeugsitz wird mit einem Reinigungsfluid aus einer Düse besprüht.

Der Erfindung liegt die Aufgabe zu Grunde, eine Innenraumverkleidung für ein Fahrzeug und ein Verfahren zum Reinigen einer Oberfläche einer Innenraumverkleidung in einem Fahrzeug zu schaffen, bei denen ein Reinigen effizienter durchgeführt werden kann.

Die Aufgabe wird erfindungsgemäß durch eine Innenraumverkleidung mit den Merkmalen des Patentanspruchs 1 und ein Verfahren mit den Merkmalen des Patentanspruchs 10 gelöst. Vorteilhafte Ausgestaltungen der Erfindung ergeben sich aus den Unteransprüchen.

Insbesondere wird eine Innenraumverkleidung für ein Fahrzeug geschaffen, umfassend eine außenliegende Oberfläche, mindestens einen auf der außenliegenden Oberfläche angeordneten Schmutzsammelbereich, und mindestens eine Schmutzleiteinrichtung, wobei die mindestens eine Schmutzleiteinrichtung derart ausgebildet ist, auf der außenliegenden Oberfläche angeordnete Schmutzpartikel und/oder Staub in den Schmutzsammelbereich zu transportieren und/oder einen Transport von Schmutzpartikeln und/oder Staub zu steuern.

Ferner wird ein Verfahren zum Reinigen einer Oberfläche einer Innenraumverkleidung in einem Fahrzeug zur Verfügung gestellt, wobei die Innenraumverkleidung eine außenliegende Oberfläche, mindestens einen auf der außenliegenden Oberfläche angeordneten Schmutzsammelbereich, und mindestens eine Schmutzleiteinrichtung umfasst, aufweisend: Zusammenführen von Schmutzpartikeln und/oder Staub an dem mindestens einen Schmutzsammelbereich auf der außenliegenden Oberfläche mittels der mindestens einen Schmutzleiteinrichtung, Entfernen der Schmutzpartikel und/oder des Staubs aus dem mindestens einen Schmutzsammelbereich.

Der Erfindung liegt der Gedanke zugrunde, Schmutzpartikel und/oder Staub auf einer außenliegenden Oberfläche einer Innenraumverkleidung eines Fahrzeugs gezielt in einen Schmutzsammelbereich zu befördern oder einen Transport der Schmutzpartikel und/oder des Staubs zumindest zu steuern, sodass eine Reinigung vereinfacht ist. Hierzu weist die Innenraumverkleidung mindestens eine Schmutzleiteinrichtung auf. Die mindestens eine Schmutzleiteinrichtung ist derart ausgebildet, auf der Oberfläche angeordnete Schmutzpartikel und/oder Staub in den Schmutzsammelbereich zu transportieren oder einen Transport von Schmutzpartikeln und/oder Staub zu steuern. Insbesondere soll ein Transport hierbei entlang der außenliegenden Oberfläche in Richtung des mindestens einen Schmutzsammelbereichs erfolgen, das heißt zumindest abschnittsweise parallel zu dieser. Der Vorteil der Erfindung ist, dass ein optisches Erscheinungsbild der außenliegenden Oberfläche nicht beeinträchtigt wird, wie dies beispielsweise bei dem im Stand der Technik verwendeten Gitterrost der Fall ist.

Eine Innenraumverkleidung kann insbesondere eine mit einem Textil oder einem sonstigen Stoff überzogene Fläche sein, beispielsweise ein Fahrzeugsitz, ein Überzug, ein Teppich beispielsweise auf dem Fahrzeugboden des Fahrzeugs, eine Tür- oder Deckenauskleidung, eine Hutablage des Fahrzeugs oder eine sonstige Oberflächen. Eine Innenauskleidung kann auch in einem Kofferraum des Fahrzeugs ausgebildet sein.

Der Schmutzsammelbereich ist insbesondere an der außenliegenden Oberfläche angeordnet. Der Schmutzsammelbereich kann beispielsweise als Fuge oder als Vertiefung der außenliegenden Oberfläche ausgebildet sein, beispielsweise in Form einer Sitzfalte auf einem Sitzkissen eines Fahrzeugsitzes. Der Schmutzsammelbereich kann aber auch einfach als ausgezeichneter Bereich in Form einer Fläche auf der außenliegenden Oberfläche ausgebildet sein, auf der Schmutzpartikel und/oder Staub gezielt gesammelt werden sollen. Unter einem Schmutzsammelbereich kann ein Gebiet, ein Ort oder eine definierte Fläche verstanden werden, an der sich Schmutz gesammelt werden kann, bzw. zu dem Schmutz gezielt gelangen kann, damit der Schmutz in gesammelter Form bzw. in vereinigter Form und entfernt werden kann. Hierbei kann Schmutz in partikelförmiger, flüssiger, viskoser Form oder in einer Kombinationen hiervon, beispielsweise als Suspensionen, vorliegen und gesammelt werden. Staub kann beispielsweise in Form von Staubpartikeln oder Schmutzpartikeln vorliegen.

Ein Fahrzeug ist insbesondere ein Kraftfahrzeug. Insbesondere kann ein Fahrzeug ein automatisiert fahrendes Kraftfahrzeug sein. Das Fahrzeug kann aber auch ein Luftfahrzeug, ein Schienenfahrzeug, ein Wasserfahrzeug oder ein sonstiges Landfahrzeug sein.

Durch das Sammeln von Schmutzpartikeln und/oder Staub an Schmutzsammelbereichen kann das Reinigen vereinfacht werden, insbesondere bei einem automatisierten Reinigen des Fahrzeugs. Beispielsweise kann vorgesehen sein, dass das Fahrzeug, insbesondere automatisiert, zum Reinigen in ein Servicezentrum fährt. Im Servicezentrum kann es automatisiert gereinigt werden. Durch die vorgesehenen Schmutzsammelbereiche muss die komplette Innenverkleidung nicht bei jedem Besuch im Servicezentrum gereinigt werden, sondern es kann ausreichend sein, lediglich die Schmutzsammelbereiche zu reinigen. Hierdurch können Zeit, Aufwand und Kosten eingespart werden, ohne dass ein Wohlbefinden von Fahrzeuginsassen bei anschließenden Fahrten beeinträchtigt ist.

Es ist vorgesehen, dass die mindestens eine Schmutzleiteinrichtung mindestens einen adhäsiven Bereich aufweist, Insbesondere kann dies ein Bereich sein, der mit einer Klebeschicht versehen ist, sodass Schmutzpartikel und/oder Staub dort anhaften und sich nicht mehr von der Klebeschicht lösen können. Auf diese Weise können Schmutzpartikel und/oder Staub gezielt von anderen Oberflächen und aus dem Innenraum entfernt bzw. eingefangen und fixiert werden. Die Schmutzleiteinrichtung bzw. der adhäsive Bereich werden in dem mindestens einen Schmutzsammelbereich angeordnet, sodass Schmutzpartikel und/oder Staub in dem mindestens einen Schmutzsammelbereich gebunden werden.

In einer Ausführungsform ist vorgesehen, dass die mindestens eine Schmutzleiteinrichtung mindestens eine Schwingungserzeugungseinrichtung umfasst, wobei die mindestens eine Schwingungserzeugungseinrichtung derart angeordnet und ausgebildet ist, dass die außenliegende Oberfläche zum Transportieren der Schmutzpartikel und/oder des Staubs zumindest abschnittsweise in Schwingung versetzt werden kann. Die Schwindungserzeugungseinrichtung kann beispielsweise Ultraschallschwingungen erzeugen und die außenliegende Oberfläche in Schwingungen versetzen. Es kann hierbei zum Reinigen eine Daueranregung oder eine gepulste Anregung vorgesehen sein. Ist eine Anregung beispielsweise derart gewählt, dass sich stehende Wellen auf der außenliegenden Oberfläche ausbilden, so sammeln sich Schmutzpartikel und/oder Staub bevorzugt an Orten der geringsten Auslenkung der außenliegenden Oberfläche, das heißt an den Knoten der stehenden Welle. Bei entsprechender Ausbildung und Anordnung der Schwindungserzeugungseinrichtung können Schmutzpartikel und/oder Staub gezielt zu einem in einem solchen Knoten angeordneten Schmutzsammelbereich befördert werden und anschließend von dort entfernt werden. Auch Schwingungen unterhalb des Ultraschallbereichs können verwendet werden, insbesondere auch niederfrequente Schwingungen vom Hz- bis in den kHz-Bereich. Die Frequenz bzw. die Frequenzen der Schwingungen sind hierbei insbesondere auf den jeweiligen Anwendungsfall und die konkrete Form der außenliegenden Oberfläche optimiert.

In einer weiteren Ausführungsform ist vorgesehen, dass die mindestens eine Schmutzleiteinrichtung mindestens einen auf der außenliegenden Oberfläche angeordneten elektrisch aufgeladenen oder aufladbaren Bereich aufweist. Es kann vorgesehen sein, dass der Bereich mittels einer Ladungsquelle, beispielsweise einer Spannungsquelle, gezielt elektrostatisch aufgeladen wird. Es kann alternativ auch vorgesehen sein, den Bereich unter Ausnutzung von Reibungselektrizität elektrisch aufzuladen. Als Materialien zum Ausbilden des mittels Reibungselektrizität aufladbaren Bereichs können insbesondere polarisierbare Isolatoren verwendet werden, beispielsweise in Form von Kunstfasern. Eine Reibung auf der außenliegenden Oberfläche, hervorgerufen beispielsweise von einem Fahrzeuginsassen, führt zu einer elektrostatischen Aufladung des aufladbaren Bereichs, wodurch Schmutz von diesem Bereich angezogen und in diesem Bereich elektrostatisch gebunden wird. Ist die Schmutzleiteinrichtung in dem mindestens einen Schmutzsammelbereich angeordnet, so werden Schmutzpartikel und/oder Staub dort elektrostatisch gebunden.

In einer Ausführungsform ist vorgesehen, dass die mindestens eine Schmutzleiteinrichtung mindestens eine auf der außenliegenden Oberfläche angeordnete rillenförmige Struktur umfasst. Eine Richtung der Rillen der rillenförmigen Struktur ist hierbei derart gewählt, dass Schmutzpartikel und/oder Staub sich entlang der Rillen in Richtung des mindestens einen Schmutzsammelbereichs bewegen können. Durch diese Vorgabe der Richtung bewegen sich Schmutzpartikel und/oder Staub bevorzugt in Richtung des mindestens einen Schmutzsammelbereichs. Ein Abstand der Rillen liegt bevorzugt im Submillimeter oder Millimeterbereich.

In einer weiteren Ausführungsform ist vorgesehen, dass die mindestens eine Schmutzleiteinrichtung mindestens eine auf der außenliegenden Oberfläche angeordnete flüssigkeitsabweisende Struktur umfasst. Diese flüssigkeitsabweisende Struktur kann insbesondere mikro- und/oder nanoskopische Strukturen umfassen, welche für eine geringe Benetzbarkeit und insbesondere eine hydrophoben Eigenschaft der außenliegenden Oberfläche sorgen. Dieser Effekt ist auch als Lotoseffekt bekannt. Schmutzpartikel und/oder Staub können dann in diesem Bereich weniger gut anhaften und sammeln sich daher bevorzugt in dem mindestens einen Schmutzsammelbereich an, an dem keine solche flüssigkeitsabweisende Struktur vorgesehen ist.

Es kann vorgesehen sein, dass zum Reinigen der flüssigkeitsabweisenden Struktur eine Flüssigkeit verwendet wird, mittels derer Schmutzpartikel und/oder Staub gezielt von der schmutzabweisenden Struktur der außenliegenden Oberfläche wegtransportiert werden.

In einer weiteren Ausführungsform ist vorgesehen, dass die mindestens eine Schmutzleiteinrichtung mindestens eine auf der außenliegenden Oberfläche angeordnete Gitterstruktur umfasst. Die Gitterstruktur ist insbesondere eine zweidimensionale Gitterstruktur. Die Gitterstruktur soll hierbei insbesondere eine Ausbreitung von größeren, insbesondere nichtfesten, Schmutzpartikeln verhindern. Die Schmutzpartikel werden hierzu in Maschenöffnungen der Gitterstruktur eingeschlossen und können nicht weiter über die außenliegende Oberfläche wandern. Eine Größe der Maschenöffnungen der Gitterstruktur liegt bevorzugt im Submillimeter- oder Millimeterbereich. Die Gitterstruktur ist insbesondere in dem mindestens einen Schmutzsammelbereich angeordnet, sodass Schmutzpartikel und/oder Staub in dem mindestens einen Schmutzsammelbereich verbleiben.

In einer weiteren Ausführungsform ist vorgesehen, dass die Innenraumverkleidung derart ausgebildet ist, dass eine Orientierung zumindest eines Teils der außenliegenden Oberfläche verändert werden kann, wobei die mindestens eine Schmutzleiteinrichtung Orientierungsmittel aufweist, mit denen die Orientierung zumindest des Teils der außenliegenden Oberfläche eingestellt werden kann, sodass durch Verändern der Orientierung ein Transport der Schmutzpartikel und/oder des Staubs in Richtung des mindestens einen Schmutzsammelbereichs erfolgt. Beispielsweise kann die außenliegende Oberfläche an einer Oberseite eines Sitzbereichs eines Fahrzeugsitzes angeordnet sein. Mittels der Orientierungsmittel lässt sich der Sitzbereich des Fahrzeugsitzes beispielsweise von einer waagerechten Position in eine senkrechte Position bringen, sodass Schmutzpartikel und/oder Staub von dem Sitzbereich auf einen unterhalb des Sitzkissens auf einer Fahrzeugboden angeordneten Schmutzsammelbereich fallen und dort gesammelt werden können. Der Fahrzeugboden wird hierbei insbesondere auch als Teil der außenliegenden Oberfläche bzw. der Innenraumverkleidung betrachtet.

Ferner wird ein Fahrzeugsitz geschaffen, umfassend eine Innenraumverkleidung gemäß einer der beschriebenen Ausführungsformen.

Weiter wird ein Fahrzeug geschaffen, umfassend mindestens eine Innenraumverkleidung gemäß einer der beschriebenen Ausführungsformen.

In einer Ausführungsform des Verfahrens ist vorgesehen, dass das Entfernen der Schmutzpartikel und/oder des Staubs aus dem mindestens einen Schmutzsammelbereich mittels eines Reinigungsroboters erfolgt. Der Reinigungsroboter weist hierzu beispielsweise einen Führungsarm mit einer daran angeordneten Saugvorrichtung auf, mittels derer die mindestens eine Schmutzsammelstelle gezielt abgesaugt und gereinigt werden kann.

In einer weiterbildenden Ausführungsform des Verfahrens ist vorgesehen, dass der Reinigungsroboter im Innenraum des Fahrzeugs ausschließlich den mindestens einen Schmutzsammelbereich reinigt. Hierdurch können Zeit und Kosten eingespart werden. Da die Schmutzpartikel und/oder der Staub sich im mindestens einen Schmutzsammelbereich ansammelt, kann ausschließlich dort gereinigt werden. Trotzdem ermöglicht die Erfindung, dass die außenliegende Oberfläche der Innenraumverkleidung vollflächig gesäubert ist.

Es kann auch vorgesehen sein, dass die beschriebenen Ausführungsformen, insbesondere die Ausführungsformen der Schmutzleiteinrichtung, miteinander kombiniert werden.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform der Innenraumverkleidung für ein Fahrzeug am Beispiel eines Fahrzeugsitzes;
- Fig. 2: eine schematische Darstellung einer weiteren Ausführungsform der Innenraumverkleidung für ein Fahrzeug am Beispiel eines Fahrzeugsitzes;
- Fig. 3: eine schematische Darstellung einer weiteren Ausführungsform der Innenraumverkleidung für ein Fahrzeug am Beispiel eines Fahrzeugsitzes;
- Fig. 4: eine schematische Darstellung einer weiteren Ausführungsform der Innenraumverkleidung für ein Fahrzeug am Beispiel eines Fahrzeugsitzes;
- Fig. 5: eine schematische Darstellung einer rillenförmigen Struktur zur Verdeutlichung einer weiteren Ausführungsform der Schmutzleiteinrichtung;
- Fig. 6: eine schematische Darstellung einer Gitterstruktur zur Verdeutlichung einer weiteren Ausführungsform der Schmutzleiteinrichtung oder des Schmutzsammelbereichs.

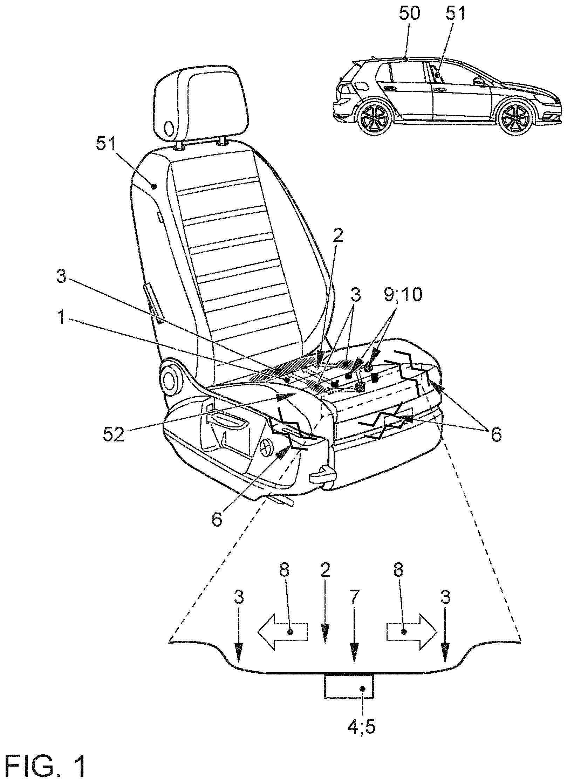

In Fig. 1 ist eine schematische Darstellung einer Ausführungsform der Innenraumverkleidung 1 für ein Fahrzeug 50 am Beispiel eines Fahrzeugsitzes 51 gezeigt. Die Innenraumverkleidung 1 ist hierbei als Sitzbezug des Fahrzeugsitzes 51 ausgebildet, wobei eine außenliegende Oberfläche 2 die Fläche ist, auf der ein Fahrinsasse auf dem Fahrzeugsitz 51 sitzt. Die Innenraumverkleidung 1 weist mehrere Schmutzsammelbereiche 3 auf der außenliegenden Oberfläche 2 auf. Die Schmutzsammelbereiche 3 befinden sich beispielsweise an Vertiefungen auf dem Sitzkissen 52. Ferner umfasst die Innenraumverkleidung 1 eine Schmutzleiteinrichtung 4, wobei die Schmutzleiteinrichtung 4 eine Schwingungserzeugungseinrichtung 5 ist, beispielsweise ein Ultraschallgeber. Dieser Ultraschallgeber kann die außenliegende Oberfläche 2 gezielt in Schwingungen 6 versetzen, welche sich von einem Anregungszentrum 7 in Richtung 8 der Schmutzsammelbereiche 3 ausbreiten. Hierbei werden Schmutzpartikel 9 und/oder Staub 10 von dem Anregungszentrum 7 aus in die Schmutzsammelbereiche 3 transportiert und verbleiben dort. Das Anregen mittels des Ultraschallgebers erfolgt bevorzugt vor oder während einer Reinigung. Es kann aber auch vorgesehen sein, dass das Anregen unabhängig vom Reinigen beispielsweise in regelmäßigen Abständen erfolgt, um das Sitzkissen 52 von Schmutzpartikeln und/oder Staub zu befreien.

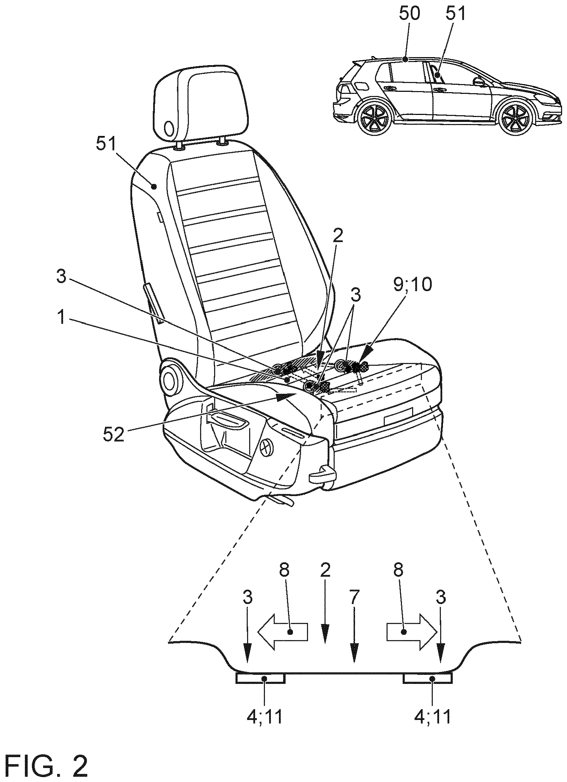

In Fig. 2 ist eine schematische Darstellung einer weiteren Ausführungsform der Innenraumverkleidung 1 für ein Fahrzeug 50 am Beispiel eines Fahrzeugsitzes 51 gezeigt. Die Innenraumverkleidung 1 ist ähnlich wie die in der Fig. 1 gezeigte Ausführungsform ausgebildet, gleiche Bezugszeichen bezeichnen gleiche Merkmale und Begriffe. Die Innenraumverkleidung 1 weist in der gezeigten Ausführungsform zwei Schmutzleiteinrichtungen 4 auf, welche als an der außenliegenden Oberfläche 2 angeordnete aufgeladene oder aufladbare Bereiche 11 ausgebildet sind. Die aufgeladenen oder aufladbaren Bereiche 11 sind hierbei als Teil der Schmutzsammelbereiche 3 ausgebildet. Die aufgeladenen oder aufladbaren Bereiche 11 sind oder werden elektrostatisch aufgeladen, beispielsweise mittels einer Spannungsquelle oder über Reibungselektrizität. Schmutzpartikel 9 und/oder Staub 10, die in einen Einflussbereich der aufgeladenen oder aufladbaren Bereiche 11 kommen, werden von diesen angezogen und in diesen Bereichen 11 elektrostatisch an der außenliegenden Oberfläche 2 gebunden. Daher erfolgt mit der Zeit ein Transport der Schmutzpartikel 9 und/oder des Staubs 10 in Richtung 8 der Schmutzsammelbereiche 3. Bei einer nachfolgenden Reinigung können ausschließlich diese aufgeladenen oder aufladbaren Bereiche 11 bzw. die Schmutzsammelbereiche 3 gereinigt, beispielsweise abgesaugt, werden.

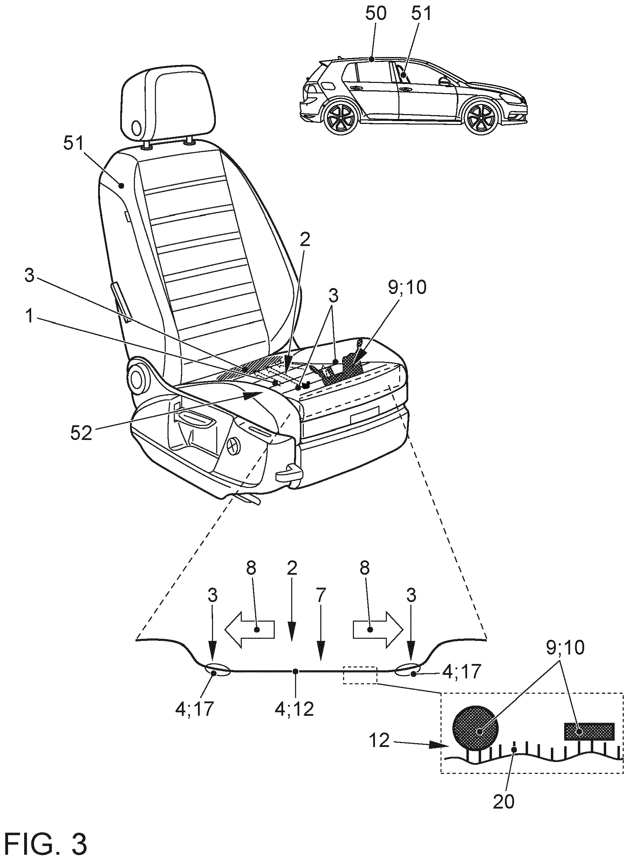

In Fig. 3 ist eine schematische Darstellung einer weiteren Ausführungsform der Innenraumverkleidung 1 für ein Fahrzeug 50 am Beispiel eines Fahrzeugsitzes 51 gezeigt. Die Innenraumverkleidung 1 ist ähnlich wie die in den Figuren 1 und 2 gezeigten Ausführungsformen ausgebildet, gleiche Bezugszeichen bezeichnen gleiche Merkmale und Begriffe. Die Innenraumverkleidung 1 weist in der gezeigten Ausführungsform eine Schmutzleiteinrichtung 4 auf, welche als an der außenliegenden Oberfläche 2 angeordnete flüssigkeitsabweisende Struktur 12 ausgebildet ist. Die flüssigkeitabweisende Struktur 12 weist beispielsweise mikro- und nanoskopische Oberflächenstrukturen 20 auf, welche hydrophobe und schmutzabweisende Eigenschaften haben. Schmutzpartikel 9 und/oder Staub 10, die sich auf der flüssigkeitsabweisenden Struktur 12 niederschlagen, bleiben an dieser nicht haften und können leicht wieder abgelöst werden, beispielsweise durch während einer Fahrt des Fahrzeugs auftretende Vibrationen. Die Schmutzsammelbereiche 3 weisen hingegen keine solche flüssigkeitsabweisende Struktur 12 auf. Daher erfolgt mit der Zeit durch zufällige Bewegungen ein Transport der Schmutzpartikel 9 und/oder des Staubs 10 in Richtung 8 der Schmutzsammelbereiche 3. Bei einer nachfolgenden Reinigung können ausschließlich die Schmutzsammelbereiche 3 gereinigt, beispielsweise abgesaugt, werden.

Es ist vorgesehen, dass die Schmutzsammelbereiche 3 jeweils als Schmutzleiteinrichtung 4 einen adhäsiven Bereich 17 umfassen, an dem Schmutzpartikel 9 und/oder Staub 10 haften, insbesondere kleben, bleiben.

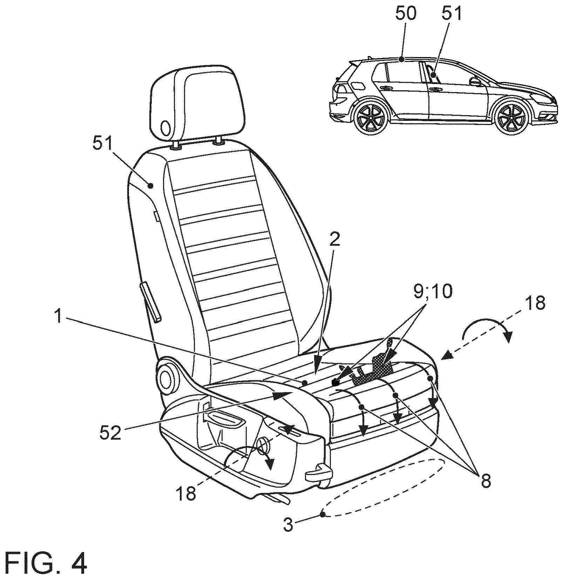

In Fig. 4 ist eine schematische Darstellung einer weiteren Ausführungsform der Innenraumverkleidung 1 am Beispiel eines Fahrzeugsitzes 51 gezeigt. Es kann alternativ oder zusätzlich vorgesehen sein, dass eine Schmutzleiteinrichtung 4 des Fahrersitzes 51 Orientierungsmittel 18 aufweist, mit denen die Orientierung zumindest eines Teils der außenliegenden Oberfläche 2 eingestellt werden kann. Die Orientierungsmittel 18 können beispielsweise als ein an einem vorderen Ende des Sitzkissens 52 ausgebildetes Scharnier ausgebildet sein, mit dem das Sitzkissen 52 derart angekippt werden kann, dass auf der außenliegenden Oberfläche 2 vorhandene Schmutzpartikel 9 und/oder Staub 10 entlang der Oberfläche in Richtung 8 eines vor dem Fahrersitz 51 angeordneten Schmutzsammelbereichs 3 transportiert wird. Der Bereich vor dem Fahrzeugsitz 51, in dem sich der Schmutzsammelbereich 3 befindet, wird hierbei auch als Teil der außenliegenden Oberfläche 2 bzw. der Innenraumverkleidung 1 betrachtet.

Die in den Figuren 1 bis 4 gezeigten Ausführungsformen der Innenraumverkleidung 1 sind lediglich beispielhaft gewählt. Die Innenraumverkleidung 1 kann prinzipiell auch an anderen Stellen im Fahrzeug 50 ausgebildet sein, beispielsweise an einem Fahrzeugboden, an einer Konsole, an einem Fahrzeughimmel bzw. an einer Fahrzeugdecke, an einer Türenauskleidung, an einer Hutablage oder in einem Kofferraum.

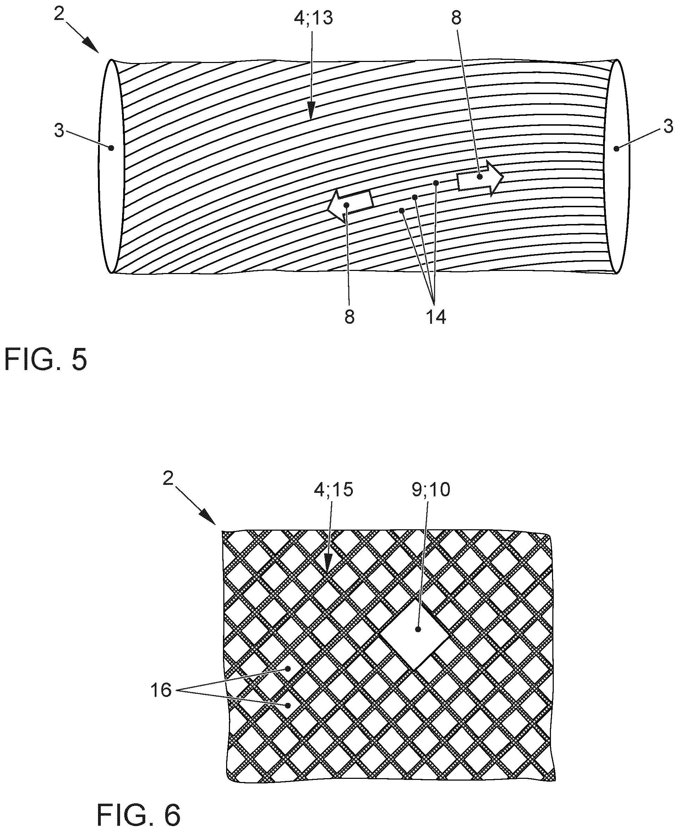

In Fig. 5 ist eine schematische Darstellung einer rillenförmigen Struktur 13 zur Verdeutlichung einer weiteren Ausführungsform der Schmutzleiteinrichtung 4 dargestellt. Auf der außenliegenden Oberfläche 2, beispielsweise einem Sitzbezug eines Fahrzeugsitzes, sind benachbarte Rillen 14 angeordnet, welche in Richtung 8 eines Schmutzsammelbereichs 3 orientiert sind. Schmutzpartikel und/oder Staub, die sich auf der außenliegenden Oberfläche 2 im Bereich der Rillen 14 niederschlagen, werden anschließend, beispielsweise durch Bewegungen eines Fahrzeuginsassen, durch Luftströmungen oder durch Vibrationen des Fahrzeugs, bevorzugt in eine Längsrichtung entlang der Rillen 14 und hierdurch in Richtung 8 der Schmutzsammelbereiche 3 transportiert.

In Fig. 6 ist eine schematische Darstellung einer Gitterstruktur 15 zur Verdeutlichung einer weiteren Ausführungsform der Schmutzleiteinrichtung 4 dargestellt. Die Gitterstruktur 15 umfasst ein zweidimensionales Gitter mit benachbart angeordneten Maschenöffnungen 16. Schmutzpartikel 9 und/oder Staub 10, der sich auf der außenliegenden Oberfläche 2 niederschlägt, wird in seiner Bewegung durch die Maschenöffnungen 16 des Gitters behindert, verbleibt daher an seiner ursprünglichen Position und kann sich nicht weiter ausbreiten. Dies ist insbesondere bei nichtfesten Schmutzpartikeln 9 von Vorteil. Wird die Gitterstruktur 15 in einem Schmutzsammelbereich angeordnet, können Schmutzpartikel 9 und/oder Staub dort örtlich fixiert werden.

Es kann vorgesehen sein, dass die in den Figuren 1 bis 6 beschriebenen Ausführungsformen der Schmutzleiteinrichtung 4 miteinander kombiniert werden.

Mit den gezeigten Ausführungsformen ist eine Steuerung eines Sammelns oder Transports von Schmutzpartikeln 9 und/oder Staub 10 verbessert möglich.

### Bezugszeichenliste

- 1: Innenraumverkleidung
- 2: außenliegende Oberfläche
- 3: Schmutzsammelbereich
- 4: Schmutzleiteinrichtung
- 5: Schwingungserzeugungseinrichtung
- 6: Schwingung
- 7: Anregungszentrum
- 8: Richtung
- 9: Schmutzpartikel
- 10: Staub
- 11: aufgeladene/aufladbarer Bereich
- 12: flüssigkeitsabweisende Struktur
- 13: rillenförmige Struktur
- 14: Rille
- 15: Gitterstruktur
- 16: Maschenöffnung
- 17: adhäsiver Bereich
- 50: Fahrzeug
- 51: Fahrzeugsitz
- 52: Sitzkissen

## Patentansprüche

1. Innenraumverkleidung (1) für ein Fahrzeug (50), umfassend:
eine außenliegende Oberfläche (2),
mindestens einen auf der außenliegenden Oberfläche (2) angeordneten Schmutzsammelbereich (3), und
mindestens eine Schmutzleiteinrichtung (4), wobei die mindestens eine Schmutzleiteinrichtung (4) derart ausgebildet ist, auf der außenliegenden Oberfläche (2) angeordnete Schmutzpartikel (9) und/oder Staub (10) in den Schmutzsammelbereich (3) zu transportieren und/oder einen Transport von Schmutzpartikeln (9) und/oder Staub (10) zu steuern,
**dadurch gekennzeichnet, dass**
die mindestens eine Schmutzleiteinrichtung (4) mindestens einen adhäsiven Bereich (17) aufweist, wobei der mindestens eine adhäsive Bereich in dem mindestens einen Schmutzsammelbereich angeordnet ist, sodass Schmutzpartikel und/oder Staub in dem mindestens einen Schmutzsammelbereich gebunden werden.

2. Innenraumverkleidung (1) nach Anspruch 1, **dadurch gekennzeichnet, dass** die mindestens eine Schmutzleiteinrichtung (4) mindestens eine Schwingungserzeugungseinrichtung (5) umfasst, wobei die mindestens eine Schwingungserzeugungseinrichtung (5) derart angeordnet und ausgebildet ist, dass die außenliegende Oberfläche (2) zum Transportieren der Schmutzpartikel (9) und/oder des Staubs (10) zumindest abschnittsweise in Schwingung (6) versetzt werden kann.

3. Innenraumverkleidung (1) nach Anspruch 1 oder 2, **dadurch gekennzeichnet, dass** die mindestens eine Schmutzleiteinrichtung (4) mindestens einen auf der außenliegenden Oberfläche (2) angeordneten elektrisch aufgeladenen oder aufladbaren Bereich (11) aufweist.

4. Innenraumverkleidung (1) nach einem der vorangegangenen Ansprüche, **dadurch gekennzeichnet, dass** die mindestens eine Schmutzleiteinrichtung (4) mindestens eine auf der außenliegenden Oberfläche (2) angeordnete rillenförmige Struktur (13) umfasst.

5. Innenraumverkleidung (1) nach einem der vorangegangenen Ansprüche, **dadurch gekennzeichnet, dass** die mindestens eine Schmutzleiteinrichtung (4) mindestens eine auf der außenliegenden Oberfläche (2) angeordnete flüssigkeitsabweisende Struktur (12) umfasst.

6. Innenraumverkleidung (1) nach einem der vorangegangenen Ansprüche, **dadurch gekennzeichnet, dass** die mindestens eine Schmutzleiteinrichtung (4) mindestens eine auf der außenliegenden Oberfläche (2) angeordnete Gitterstruktur (15) umfasst.

7. Innenraumverkleidung (1) nach einem der vorangegangenen Ansprüche, **dadurch gekennzeichnet, dass** die Innenraumverkleidung (1) derart ausgebildet ist, dass eine Orientierung zumindest eines Teils der außenliegenden Oberfläche (2) verändert werden kann, wobei die mindestens eine Schmutzleiteinrichtung (4) Orientierungsmittel aufweist, mit denen die Orientierung zumindest des Teils der außenliegenden Oberfläche (2) eingestellt werden kann, sodass durch Verändern der Orientierung ein Transport der Schmutzpartikel (9) und/oder des Staubs (10) in Richtung (8) des mindestens einen Schmutzsammelbereichs (3) erfolgt.

8. Fahrzeugsitz (51), umfassend eine Innenraumverkleidung (1) gemäß einem der Ansprüche 1 bis 7.

9. Fahrzeug (50), umfassend mindestens eine Innenraumverkleidung (1) gemäß einem der Ansprüche 1 bis 7.

10. Verfahren zum Reinigen einer Oberfläche einer Innenraumverkleidung (1) in einem Fahrzeug (50), wobei die Innenraumverkleidung (1) eine außenliegende Oberfläche (2), mindestens einen auf der außenliegenden Oberfläche (2) angeordneten Schmutzsammelbereich (3), und
mindestens eine Schmutzleiteinrichtung (4) umfasst, umfassend:
Zusammenführen von Schmutzpartikeln (9) und/oder Staub (10) an dem mindestens einen Schmutzsammelbereich (3) auf der außenliegenden Oberfläche (2) mittels der mindestens einen Schmutzleiteinrichtung (4),
wobei die mindestens eine Schmutzleiteinrichtung (4) mindestens einen adhäsiven Bereich (17) aufweist, wobei der mindestens eine adhäsive Bereich in dem mindestens einen Schmutzsammelbereich angeordnet ist, sodass Schmutzpartikel und/oder Staub in dem mindestens einen Schmutzsammelbereich gebunden werden,
Entfernen der Schmutzpartikel (9) und/oder des Staubs (10) aus dem mindestens einen Schmutzsammelbereich (3).

11. Verfahren nach Anspruch 10, **dadurch gekennzeichnet, dass** das Entfernen der Schmutzpartikel (9) und/oder des Staubs (10) aus dem mindestens einen Schmutzsammelbereich (3) mittels eines Reinigungsroboters erfolgt.

12. Verfahren nach Anspruch 11, **dadurch gekennzeichnet, dass** der Reinigungsroboter im Innenraum des Fahrzeugs (50) ausschließlich den mindestens einen Schmutzsammelbereich (3) reinigt.

## Claims

1. Interior trim (1) for a vehicle (50), comprising:
an external surface (2),
at least one dirt-collection region (3) arranged on the external surface (2), and
at least one dirt-conducting device (4), the at least one dirt-conducting device (4) being designed to transport dirt particles (9) and/or dust (10) situated on the external surface (2) into the dirt-collection region (3) and/or to control transportation of dirt particles (9) and/or dust (10),
**characterized in that**
the at least one dirt-conducting device (4) has at least one adhesive region (17), the at least one adhesive region being arranged in the at least one dirt-collection region such that dirt particles and/or dust are bound in the at least one dirt-collection region.

2. Interior trim (1) according to claim 1, **characterized in that** the at least one dirt-conducting device (4) comprises at least one vibration-generating device (5), the at least one vibration-generating device (5) being arranged and designed such that at least portions of the external surface (2) can be made to vibrate (6) in order to transport the dirt particles (9) and/or the dust (10).

3. Interior trim (1) according to claim 1 or 2, **characterized in that** the at least one dirt-conducting device (4) has at least one electrically charged or chargeable region (11) arranged on the external surface (2).

4. Interior trim (1) according to any of the preceding claims,
**characterized in that** the at least one dirt-conducting device (4) comprises at least one groove-shaped structure (13) arranged on the external surface (2).

5. Interior trim (1) according to any of the preceding claims,
**characterized in that** the at least one dirt-conducting device (4) comprises at least one liquid-repellent structure (12) arranged on the external surface (2).

6. Interior trim (1) according to any of the preceding claims,
**characterized in that** the at least one dirt-conducting device (4) comprises at least one lattice structure (15) arranged on the external surface (2).

7. Interior trim (1) according to any of the preceding claims,
**characterized in that** the interior trim (1) is designed such that an orientation of at least a part of the external surface (2) can be changed, the at least one dirt-conducting device (4) having orientation means by means of which the orientation of at least the part of the external surface (2) can be adjusted such that, by changing the orientation, the dirt particles (9) and/or the dust (10) are transported in the direction (8) of the at least one dirt-collection region (3).

8. Vehicle seat (51) comprising an interior trim (1) according to any of claims 1 to 7.

9. Vehicle (50) comprising at least one interior trim (1) according to any of claims 1 to 7.

10. Method for cleaning a surface of an interior trim (1) in a vehicle (50), wherein the interior trim (1) comprises an external surface (2), at least one dirt-collection region (3) arranged on the outer surface (2), and
at least one dirt-conducting device (4), the method comprising:
combining dirt particles (9) and/or dust (10) on the at least one dirt-collection region (3) on the external surface (2) by means of the at least one dirt-conducting device (4),
wherein the at least one dirt-conducting device (4) has at least one adhesive region (17), wherein the at least one adhesive region is arranged in the at least one dirt-collection region such that dirt particles and/or dust are bound in the at least one dirt-collection region,
removing the dirt particles (9) and/or the dust (10) from the at least one dirt-collection region (3).

11. Method according to claim 10, **characterized in that** the dirt particles (9) and/or the dust (10) are removed from the at least one dirt-collection region (3) by means of a cleaning robot.

12. Method according to claim 11, **characterized in that** the cleaning robot in the interior of the vehicle (50) cleans only the at least one dirt-collection region (3).

## Revendications

1. Habillage d'habitacle (1) pour un véhicule (50), comprenant :
une surface extérieure (2),
au moins une zone de collecte de salissures (3) disposée sur la surface extérieure (2), et
au moins un dispositif de guidage de salissures (4), l'au moins un dispositif de guidage de salissures (4) étant conçu pour transporter des particules de salissures (9) et/ou de la poussière (10) disposées sur la surface extérieure (2) dans la zone de collecte de salissures (3) et/ou pour commander un transport de particules de salissures (9) et/ou de poussière (10),
**caractérisé en ce que**
l'au moins un dispositif de guidage de salissures (4) présente au moins une zone adhésive (17), l'au moins une zone adhésive étant disposée dans l'au moins une zone de collecte de salissures, de sorte que des particules de salissures et/ou de la poussière sont liées dans l'au moins une zone de collecte de salissures.

2. Habillage d'habitacle (1) selon la revendication 1, **caractérisé en ce que** l'au moins un dispositif de guidage de salissures (4) comprend au moins un dispositif de génération de vibrations (5), l'au moins un dispositif de génération de vibrations (5) étant disposé et conçu de telle sorte que la surface extérieure (2) peut être mise en vibration (6) au moins dans certaines régions pour le transport des particules de salissures (9) et/ou de la poussière (10).

3. Habillage d'habitacle (1) selon la revendication 1 ou 2,
**caractérisé en ce que** l'au moins un dispositif de guidage de salissures (4) présente au moins une zone chargée ou pouvant être chargée électriquement (11) disposée sur la surface extérieure (2).

4. Habillage d'habitacle (1) selon l'une des revendications précédentes, **caractérisé en ce que** l'au moins un dispositif de guidage de salissures (4) comprend au moins une structure en forme de rainure (13) disposée sur la surface extérieure (2).

5. Habillage d'habitacle (1) selon l'une des revendications précédentes, **caractérisé en ce que** l'au moins un dispositif de guidage de salissures (4) comprend au moins une structure (12) repoussant les liquides disposée sur la surface extérieure (2).

6. Habillage d'habitacle (1) selon l'une des revendications précédentes, **caractérisé en ce que** l'au moins un dispositif de guidage de salissures (4) comprend au moins une structure réticulaire (15) disposée sur la surface extérieure (2).

7. Habillage d'habitacle (1) selon l'une des revendications précédentes, **caractérisé en ce que** l'habillage d'habitacle (1) est conçu de telle sorte qu'une orientation d'au moins une partie de la surface extérieure (2) peut être modifiée, l'au moins un dispositif de guidage de salissures (4) présentant des moyens d'orientation à l'aide desquels l'orientation d'au moins la partie de la surface extérieure (2) peut être réglée, de sorte qu'en modifiant l'orientation, un transport des particules de salissures (9) et/ou de la poussière (10) en direction (8) de l'au moins une zone de collecte de salissures (3) est effectué.

8. Siège de véhicule (51) comprenant un habillage d'habitacle (1) selon l'une des revendications 1 à 7.

9. Véhicule (50) comprenant au moins un habillage d'habitacle (1) selon l'une des revendications 1 à 7.

10. Procédé de nettoyage d'une surface d'un habillage d'habitacle (1) dans un véhicule (50), l'habillage d'habitacle (1) comprenant une surface extérieure (2), au moins une zone de collecte de salissures (3) disposée sur la surface extérieure (2), et
au moins un dispositif de guidage de salissures (4), comprenant :
le rassemblement de particules de salissures (9) et/ou de poussière (10) au niveau de l'au moins une zone de collecte de salissures (3) sur la surface extérieure (2) au moyen de l'au moins un dispositif de guidage de salissures (4),
l'au moins un dispositif de guidage de salissures (4) présentant au moins une zone adhésive (17), l'au moins une zone adhésive étant disposée dans l'au moins une zone de collecte de salissures, de sorte que des particules de salissures et/ou de la poussière sont liées dans l'au moins une zone de collecte de salissures,
l'élimination des particules de salissures (9) et/ou de la poussière (10) de l'au moins une zone de collecte de salissures (3).

11. Procédé selon la revendication 10, **caractérisé en ce que** l'élimination des particules de salissures (9) et/ou de la poussière (10) de l'au moins une zone de collecte de salissures (3) est effectuée à l'aide d'un robot de nettoyage.

12. Procédé selon la revendication 11, **caractérisé en ce que** le robot de nettoyage nettoie exclusivement l'au moins une zone de collecte de salissures (3) dans l'habitacle du véhicule (50).
